**Europäisches Patentamt**

**European Patent Office**

**Office européen des brevets**

(11) Veröffentlichungsnummer: **0 029 098**

**B1**

(12) # EUROPÄISCHE PATENTSCHRIFT

(45) Veröffentlichungstag der Patentschrift:
15.01.86

(51) Int. Cl.⁴: **H 01 G 9/10, H 01 M 2/04**

(21) Anmeldenummer: **80105581.5**

(22) Anmeldetag: **17.09.80**

(54) **Verschlussteil für Bechergehäuse.**

(30) Priorität: **19.11.79 DE 2946578**

(43) Veröffentlichungstag der Anmeldung:
**27.05.81 Patentblatt 81/21**

(45) Bekanntmachung des Hinweises auf die Patenterteilung:
**15.01.86 Patentblatt 86/3**

(84) Benannte Vertragsstaaten:
**BE CH FR GB IT LI NL SE**

(56) Entgegenhaltungen:
**DE-A-2 255 583**
**DE-A-2 849 189**
**FR-A-2 350 698**
**FR-E-71 417**

(73) Patentinhaber: **WOCO Franz- Josef Wolf & Co.,
Sprudelallee 19, D-6483 Bad Soden- Salmünster
(DE)**

(72) Erfinder: **Wolf, Franz Josef, Sprudelallee 19, D-6483
Bad Soden- Salmünster (DE)**

(74) Vertreter: **Jaeger, Klaus, Dr.rer.nat. Dipl.- Chem.,
Jaeger, Grams & Pontani Patentanwälte
Bergstrasse 48 1/2, D-8035 München- Gauting (DE)**

EP 0 029 098 B1

## Beschreibung

Die Erfindung betrifft ein Verschlußteil für das Gehäuse eines elektrischen Bauteils der im Oberbegriff des Patentanspruchs 1 genannten Art. Insbesondere betrifft die Erfindung ein Verschlußteil für ein Kondensatorbechergehäuse.

Die Erfindung betrifft weiterhin ein Verfahren zur Herstellung eines solchen Verschlußteils.

Die Beschreibung der Erfindung ist aus Gründen der einfacheren Darstellung auf ein Verschlußteil für das Bechergehäuse eines elektrischen Kondensators beschränkt. Der Fachmann erkennt jedoch ohne weiteres, daß ein solches Verschlußteil auch zum Verschließen von Gehäusen anderer elektrischer Bauteile verwendet werden kann, beispielsweise zum Verschließen von Batterien, Akkumulatoren, Widerständen oder anderen gekapselten elektronischen Bauteilen. Die nachstehende Beschreibung des Verschlußteils für ein Kondensatorbechergehäuse schließt diese Anwendungsgebiete für das Verschlußteil mit ein.

Weiterhin ist in der nachfolgenden Beschreibung der Erfindung der Einfachheit halber von einem in Draufsicht kreisrunden Verschlußteil ausgegangen. Dabei ist jedoch ohne weiteres erkennbar, daß das Verschlußteil in Draufsicht, also in axialer Projektion, auch quadratisch oder rechteckig, mit oder ohne abgerundeten Ecken, oder oval oder in beliebiger anderer geometrischer Form ausgebildet sein kann. Auch solche Formgebungen sollen von der nachstehenden Beschreibung des runden Bauteils mit erfaßt sein.

Es ist bekannt, Bechergehäuse von elektrischen Kondensatoren entweder durch Elastomerstopfen (DE 23 09 492 A1) oder durch Scheiben (DE 23 07 068 A1; DE 27 18 228 A1) zu verschließen. Für Bechergehäuse mit kleineren Durchmessern werden vor allem die billigeren und einfacher, verläßlicher und besser dichtenden Stopfen verwendet, während für Bechergehäuse mit größeren Durchmessern die teureren und hinsichtlich der Dichtung kritischeren, dafür aber formstabileren Scheiben verwendet werden müssen.

Die Elastomerverschlußstopfen weisen durch ihre relativ große Elastomermasse eine unkritisch gute und starke Verformbarkeit auf, sind also in der Lage, hohe elastische Rückstellkräfte aufzubringen und dadurch zuverlässig zu dichten. Der Verschluß des Bechergehäuses wird in der Regel durch Einrollen von Sicken und/oder Umbördelungen und die dadurch bewirkten Verformungen des Elastomerverschlußstopfens bewirkt.

Kritisch an den bekannten Verschlußstopfen ist die relativ hohe Permeabilität des Elastomers gegenüber den im Bechergehäuse eingeschlossenen Flüssigkeiten, insbesondere flüssigen Elektrolyten und flüssigen Dielektrika. In den Anfängen der Stopfenverschlußtechnik wurden mit Schwefel vernetzbare Elastomere als Stopfenwerkstoff verwendet. Es hat sich jedoch gezeigt, daß solche schwefelvernetzten Elastomere im Verlaufe der Zeit Schwefel in die Kondensatorflüssigkeit abgaben und zu einem vorzeitigen Unbrauchbarwerden des Kondensators führten. Dies hat dazu geführt, daß peroxidisch vernetzbare Elastomere, insbesondere EPDM, als Stopfenwerkstoff verwendet wurden. Inzwischen hat sich jedoch gezeigt, daß die Permeabilität von insbesondere EPDM untragbar hoch ist.

Auch bei relativ dicker Ausbildung des Stopfens tritt nach gewisser Zeit eine Permeation der im Bechergehäuse eingeschlossenen Flüssigkeit durch das Stopfenmaterial hindurch an die äußere Oberfläche des Stopfens ein. Die an der äußeren Stopfenoberfläche austretende Flüssigkeit verdunstet, so daß im Effekt ein ständiges Verdunsten der im Bechergehäuse eingeschlossenen Kondensatorflüssigkeit durch den Stopfen hindurch eintritt. Diese Permeation ist sogar so groß, daß die modernere Verschlußtechnologie wieder zu Stopfenwerkstoffen zurückgekehrt ist, die nicht peroxidisch, sondern nur mit Schwefel vernetzt werden können. Speziell wird wieder zunehmend Butylkautschuk als Werkstoff für die Elastomerverschlußstopfen eingesetzt. Butylkautschuk weist zwar eine relativ geringe Permeabilität, wenn auch keine Permeabilität Null, auf, ist aber mit dem empfindlichen Nachteil schwieriger Verarbeitbarkeit behaftet. Außerdem kann Butylkautschuk nicht peroxidisch vernetzt werden, sondern muß der chemisch unerwünschten Schwefelvernetzung, beispielsweise mit Mercaptanen oder Thiuramen, oder der verfahrenstechnisch ungünstigen Harzvernetzung, beispielsweise mit Cumaronharzen, unterworfen werden.

Sowohl die große Permeabilität des EPDMs als auch die schwierige Verarbeitbarkeit und gegebenenfalls der Schwefelgehalt von Butylkautschuk verhindern, daß Elastomerstopfen zum Verschließen von Bechergehäusen mit größeren Durchmessern verwendet werden können. Außerdem wird diese Verwendung auch durch rein mechanische Probleme hinsichtlich der Formstabilität solcher Stopfen verhindert.

Zum Verschließen von Bechergehäusen mit größeren Durchmessern werden daher formstabile Scheiben aus starren Werkstoffen verwendet, insbesondere aus Kunststoffen, Preßstoffen oder aus Metall. Insbesondere aus Gründen der preiswerten Herstellbarkeit und guten Temperaturbeständigkeit haben sich in jüngerer Zeit Verschlußscheiben aus Metall, insbesondere aus Aluminium, bewährt. Die gasdichte und flüssigkeitsdichte Abdichtung zwischen solchen Aluminiumscheiben und dem Rand des ebenfalls meistens aus Aluminium bestehenden Bechergehäuses erfolgt über ein Elastomer, das meistens gleichzeitig der elektrischen Isolation der metallischen Abdeckscheibe gegenüber dem Bechergehäuse dient. Das Elastomer ist als relativ dünnwandige Folie ausgebildet, die auf die zum Inneren des Bechergehäuses weisende Innenseite der metallischen Abdeckscheibe geklebt, vulkanisiert oder genietet ist. Der Durchmesser der runden Elastomerfolie ist größer als der Durchmesser der Metallscheibe, so daß die Elastomerscheibe im überstehenden Randbereich beim Einsetzen der Abdeckscheibe in die Öffnung des Bechergehäuses um den Rand der Metallscheibe herum auf deren Außenseite umschlägt. Beim anschließenden Verformen des Becherrandes wird die Elastomerfolie zwischen dem Becherrand und dem Metallscheibenrand dichtend verformt (DE 23 07 068 A1). Die elektrischen Durchführungen sind nach Art von Nieten ausgebildet, deren einer Kopf auf der Innenseite der Elastomerfolie und deren anderer Kopf auf der Außenseite der Metallscheibe aufliegt.

Nachteilig bei dieser bekannten Art der Scheibendichtung mit Metallscheiben ist, daß die relativ dünne Elastomerfolie beim Verschließen des Kondensators entweder durch Verfaltung oder durch Einreißen zu Undichtheiten führt. Bei einer Verstärkung der Elastomerfolie zur Vermeidung des Einreißens tritt verstärkt durch Materialstauchungen eine Kanalbildung und damit eine Tendenz zum undichten Verschließen der Bechergehäuse auf. Bei weiterer Schwächung der Elastomerfolie zur Verhinderung der Kanalbildung tritt verstärkt die Tendenz zum Einreißen der Folie auf. Durch Einhalten von Mittelwerten für die Folienstärke lassen sich auf diese Weise brauchbare, nicht aber restlos zufriedenstellende Ergebnisse erzielen.

Besser gelöst ist das Problem der Dichtung zwischen einer Metallscheibe und dem Bechergehäuse des Kondensators für die aus DE 27 18 228 A1 bekannte Abdeckscheibe. Bei dieser Abdeckscheibe ist das Gummidichtungselement oberseitig, unterseitig und radial außenseitig um den Metallscheibenrand herumgespritzt. Dadurch kann die Randgummierung der Metallscheibe spannungsfrei verstärkt werden. Dieser Verstärkung sind jedoch Grenzen gesetzt, da beim Verschließen des Bechergehäuses und radialen Anpressen der Bechergehäusewand Ablösungen der Gummimasse von der Metallscheibe eintreten können und damit Leckkanäle entstehen. Außerdem kann die mit der Randgummierung versehene Scheibe nicht mit voneinander isolierten elektrischen Durchführungen versehen werden.

Angesichts dieses Standes der Technik liegt der Erfindung die Aufgabe zugrunde, ein Verschlußteil der eingangs genannten Art zu schaffen, das im vorstehend erläuterten Sinne, insbesondere im Hinblick auf die ständig steigenden Anforderungen an die Temperaturbeständigkeit der Kondensatoren, permeationsfest, formstabil und technisch problemlos herstellbar ist sowie sich gleichzeitig beim Verschließen des Bechergehäuses zuverlässig und unkritisch dichtend verhält.

Zur Lösung dieser Aufgabe wird ein Verschlußteil der eingangs genannten Art vorgeschlagen, das erfindungsgemäß die im kennzeichnenden Teil des Patentanspruchs 1 genannten Merkmale aufweist. Der Grundgedanke der Erfindung liegt also mit anderen Worten darin, einen herkömmlichen Verschlußstopfen an seiner, bezogen auf das Bechergehäuse, nach außen gekehrten Stirnseite unter Bildung eines quasi-einstückigen Verbundelementes fest mit einer Metallscheibe zu verbinden und den Stopfen im Bereich dieser Metallscheibe so auszubilden, daß er den Außenrand der Metallscheibe übergreift. Die feste Verbindung zwischen der Metallscheibe und dem Elastomer des Stopfens kann durch Verkleben, Aufvulkanisieren des Elastomers oder gegebenenfalls auch durch Aufschmelzen oder Aufschweißen erfolgen. Entscheidend ist, daß zwischen der Metallscheibe und dem Elastomerteil des Verschlußteils der Erfindung eine bestimmungsgemäß unlösbare feste und vorzugsweise gasdichte und flüssigkeitsdichte flächige Verbindung besteht, so daß ein als Einheit handhabbares Verbundelement, nämlich das Verschlußteil, gebildet wird.

Das Verschlußteil wird bestimmungsgemäß vorzugsweise so verwendet, daß nach Einsetzen des Verschlußteils in die Becheröffnung eine Sicke unterhalb der Metallscheibe in die Wand des Bechers eingerollt wird, die den Elastomerteil radial nach Art der üblichen Stopfendichtung elastisch komprimiert. Durch diese mindestens eine Dichtungssicke wird das Bechergehäuse gasdicht und flüssigkeitsdicht problemlos und zuverlässig wie bei einer Stopfendichtung fest verschlossen. Anschließend wird der überstehende Rand des Bechergehäuses in gebräuchlicher Weise nach innen umgebördelt, wobei gleichzeitig der den radialen Außenrand der Metallscheibe umgebende Elastomerringabschnitt komprimiert wird. Diese Dichtung erfüllt beim Verschlußteil der Erfindung jedoch nur die Aufgabe einer zusätzlichen, nicht mehr wie bei der bekannten Abdeckscheibe die Funktion der alleinigen Hauptdichtung. Durch den festen Verbund der Metallscheibe mit dem Elastomer kann auch dann, wenn die im Gehäuse eingeschlossene Flüssigkeit durch das Stopfenmaterial hindurchtritt, praktisch keine Flüssigkeit mehr an der Außenseite des Stopfens verdunsten, da diese durch die Metallscheibe versperrt ist. Als Permeationswege und Verdunstungswege stehen lediglich der schmale Ring um den Außenrand der Scheibe herum und der schmale Ring um die Durchführungsöffnungen in der Scheibe herum zur Verfügung. Der Weg außen um den Scheibenrand herum ist dabei durch das Umbördeln des Bechergehäuserandes fast vollständig versperrt, während der Weg durch die Durchführungsöffnung hindurch durch die Durchführung selbst versperrt ist. Selbst wenn die Durchführung ausschließlich nach Art einer Vernietung am Elastomer befestigt ist und aus Gründen der elektrischen Isolierung die Metallscheibe nicht berührt, bleibt als Verdunstungsfläche an der Außenseite des Verschlußteils ein nur winziger Kreisring frei. Das Verschlußteil der Erfindung weist also die gleiche Permeationsunterdrückung wie die bekannten Scheiben auf, weist aber gleichzeitig im Gegensatz zu den bekannten Scheiben ein problemloses und unkritisches Montageverhalten und die gleichen überlegenen Dichtungseigenschaften wie die Verschlußstopfen auf. Da die eigentliche radiale Dichtung zum Bechergehäuse nicht mehr im Bereich der Metallscheibe zu erfolgen braucht, kann die den Dichtungsdruck bewirkende Reduzierung des Bechergehäusedurchmessers im Dichtungsbereich wesentlich stärker ausgebildet werden, beispielsweise durch das Einrollen einer Sicke, die deutlich unterhalb der Metallscheibe radial den stopfenartigen Teil des Elastomers zusammenschnürt.

Das solcherart ausgebildete Verschlußteil kann weiterhin auch zum Verschließen von Bechergehäusen mit relativ großen Durchmessern verwendet werden, da die fest mit dem Elastomerteil verbundene Metallscheibe dem stopfenartigen Elastomerteil die erforderliche mechanische Festigkeit gegen Durchbiegung und Durchwölbung verleiht.

Um diese Vorteile zu erzielen, muß das Elastomerteil in axialer Richtung vorzugsweise mindestens doppelt so dick wie die Scheibe, vorzugsweise mindestens viermal, insbesondere mindestens sechsmal so dick wie die Scheibe ausgebildet sein, um dem Verschlußteil in der beabsichtigten Weise den Charakter eines Elastomerstopfens zu verleihen.

Weiterhin ist der Durchmesser der in der Metallscheibe vorgesehenen mindestens einen durchgehenden Öffnung für den Durchtritt der elektrischen Durchführung vorzugweise größer als der Durchmesser der koaxial im Elastomerteil vorgesehenen durchgehenden Bohrung für den Durchtritt der elektrischen Durchführung. Diese Anordnung gewährleistet zum einen nach dem Einsetzen der meist nietartig oder drahtartig ausgebildeten elektrischen Durchführung eine ausreichend hohe elastische radiale Dichtungsspannung um das Durchführungselement herum und ermöglicht zum anderen bei ausreichender Aufweitung der Durchführungsbohrung im Elastomer und damit ausstellend großer Rückstellkraft zur Herstellung einer ausreichenden Dichtung zwischen dem Elastomerteil und dem Durchführungselement, daß dieses im Durchmesser noch immer kleiner als der Durchmesser der Öffnung in der Metallscheibe gewählt werden kann, die elektrische Durchführung also auch ohne zusätzliche Isolation elektrisch isoliert gegen die Metallscheibe ausgebildet sein kann.

Wie bereits vorstehend erwähnt, kann das aus dem Elastomerteil und der Metallscheibe als festes Verbundelement bestehende Verschlußteil durch Verkleben, Verschweißen oder andere Verbundtechniken hergestellt werden. Vorzugsweise erfolgt die Verbindung beider Elemente jedoch dadurch, daß das Elastomer im unvernetzten Zustand als Elastomerformmasse in einem Formwerkzeug um die Metallscheibe herum durch Spritzgießen geformt und anschließend vernetzt wird, also auf die Metallscheibe unter Bildung eines festen Verbundes aufvulkanisiert wird. Zu diesem Umspritzen der Metallscheibe mit der Elastomerformmasse wird vorzugsweise ein Formwerkzeug verwendet, das im Formhohlraum zapfenartige Elemente aufweist, die paßgenau in die Öffnungen der Metallscheibe eingreifen. Dies ermöglicht und erleichtert ein rasches und genaues Justieren der in das Formwerkzeug einzulegenden bzw. eingelegten Metallscheibe und verhindert gleichzeitig, daß beim Einspritzen der Elastomerformmasse diese Formmasse durch die Öffnungen in der Scheibe hindurch auf die Außenseite der Scheibe hinausquillt.

Die Erfindung ist im folgenden anhand eines Ausführungsbeispiels in Verbindung mit den Zeichnungen näher erläutert. Es zeigen:

Fig. 1 ein Ausführungsbeispiel des Verschlußteils in Draufsicht auf die Außenseite und

Fig. 2 in vergrößerter Teildarstellung und im Axialschnitt das in Fig. 1 gezeigte Ausführungsbeispiel.

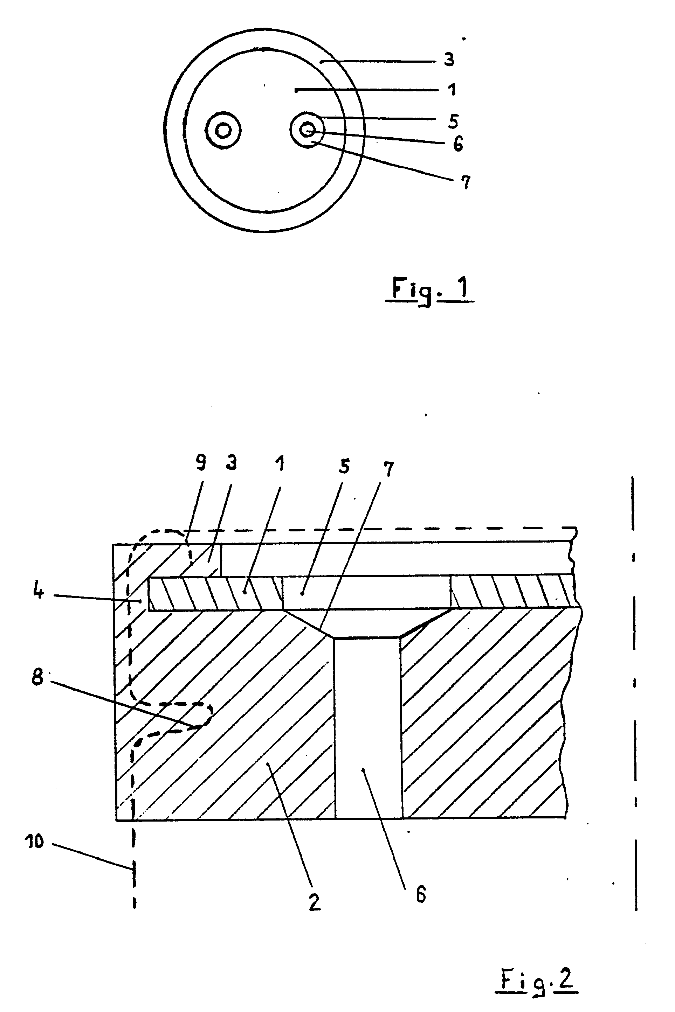

In den Figuren 1 und 2 ist ein Ausführungsbeispiel der Erfindung dargestellt. Eine Metallscheibe 1 ist fest mit einem Gummistopfen 2 verbunden und bildet dessen nach außen gekehrte Stirnseitenfläche. Der Gummistopfen 2 weist axial außenseitig einen flanschartigen Kreisring auf, der den außenseitigen Randbereich der Metallscheibe 1 bedeckt. Der Ring 3 ist über einen Ringstegbereich 4 einstückig mit dem Hauptteil des Stopfens 2 verbunden.

Der Gummistopfen 2 ist unter Bildung eines festen Verbundes auf die Metallscheibe 1 aufvulkanisiert.

Die Metallscheibe 1 weist eine durchgehende Öffnung 5 zum Durchführen einer elektrischen Durchführung, die in den Figuren nicht dargestellt ist, auf. Koaxial zur Durchführungsöffnung 5 in der Metallscheibe 1 weist der Gummistopfen 2 eine durchgehende Bohrung 6 zur Aufnahme der elektrischen Durchführung auf. Der Durchmesser der Durchführungsbohrung 6 ist deutlich kleiner als der Durchmesser der Durchführungsöffnung 5. Dies gewährleistet eine ausreichende radiale Aufweitung der Durchführungsbohrung 6 beim Hindurchzwingen eines elektrischen Durchführungselementes, dessen Durchmesser kleiner als der Durchmesser der Öffnung 5, gleichzeitig aber deutlich größer als der lichte Durchmesser der Bohrung 6 im entspannten Zustand des Elastomers ist. Auf diese Weise kann trotz der Verwendung eines metallischen Werkstoffs zur Herstellung der Scheibe 1 durch diese hindurch eine elektrisch gegenüber dieser Scheibe 1 isolierte Durchführung vorgesehen werden.

Die Öffnung 5 und die Bohrung 6 gehen über ein konisches Zwischenstück 7, das im Stopfen 2 ausgebildet ist, ineinander über. Ein Justierzapfen im Formwerkzeug, der die in Negativform durch das konische Zwischenstück wiedergegebene Geometrie aufweist, erleichtert das Einlegen der Metallscheiben in das Formwerkzeug. Außerdem wird durch den trichterartigen Übergang das Einsetzen des elektrischen Durchführungselementes in den Elastomerteil 2 erleichtert.

Nach dem Einsetzen der elektrischen Durchführungen in das Elastomerteil 2 sowie nach Durchführungen aller sonstigen üblichen und an sich bekannten Vorbereitungen wird das Verschlußteil in den oberen Becherrand eingesetzt. Der Becher wird dann in gebräuchlicher Weise durch Einrollen mindestens einer Verschlußsicke 8 und Umbördeln des oben überstehenden Randes 9 auf den Ring 3 verschlossen. In der Fig. 2 ist der Verlauf der Becherwand 10 nach dem Verschliessen des Kondensators durch unterbrochen dargestellte Linien schematisch angedeutet.

**Patentansprüche**

1. Verschlußteil für das Gehäuse eines elektrischen Bauteils, insbesondere für ein Kondensatorbechergehäuse, wobei das Verschlußteil mindestens eine axiale elektrische Durchführung aufweist und als bestimmungsgemäß unlösbar festes Verbundelement aus einer mindestens eine Öffnung für die elektrische Durchführung aufweisenden Metallscheibe und einem als Dichtungselement dienenden Elastomerteil, das zumindest die zum Gehäuseinneren weisende Innenseite der Metallscheibe vollständig bedeckt, ausgebildet ist,
dadurch gekennzeichnet,
daß das Elastomerteil (2), gemessen von der Innenseite der Metallscheibe (1), axial mindestens so dick ist, daß eine radiale Dichtung im Bereich der Mantelfläcke des Elastomerteils auf der Innenseite der Metallscheibe durch eine Reduzierung des Bechergehäusedurchmessers bewirkt wird, und auch vor der bestimmungsgemäßen Verwendung des Verschlußteils zum Verschließen des Gehäuses (10) den radialen Außenrand und zumindest den peripheren Randbereich der der Innenseite axial gegenüberliegenden Außenseite der Metallscheibe umschließend bedeckt (3,4).

2. Verschlußteil nach Anspruch 1,
dadurch gekennzeichnet,
daß das Elastomerteil (2) mindestens viermal so dick wie die Metallscheibe (1) ist.

3. Verschlußteil nach einem der Ansprüche 1 oder 2,
dadurch gekennzeichnet,
daß das Elastomerteil (2) koaxial zur Durchführungsöffnung (5) in der Metallscheibe (1) eine durchgehende Durchführungsbohrung (6) aufweist, deren Durchmesser kleiner als der Durchmesser der Durchführungsöffnung in der Metallscheibe ist.

4. Verschlußteil nach Anspruch 3,
dadurch gekennzeichnet,
daß im Elastomerteil (2) ein konischer Übergang (7) zwischen der Durchführungsöffnung (5) in der Metallscheibe (1) und der Durchführungsbohrung (6) im Elastomerteil (2) ausgebildet ist.

5. Verfahren zum Herstellen des Verschlußteils nach einem der Ansprüche 1 bis 4,
dadurch gekennzeichnet,
daß eine mit Durchführungsöffnungen versehene Metallplatte in ein Formwerkzeug eingelegt wird, das paßgenau in die Durchführungsöffnungen eingreifende Justierzapfen aufweist,
daß nach Schließen des Formwerkzeugs eine unvernetzte Elastomerformmasse in den Formhohlraum eingespritzt oder eingepreßt wird und
daß die so ausgeformte Formmasse anschließend vernetzt wird.

**Claims**

1. A sealing means for the case of an electrical component, especially for a capacitor tubular case, comprising at least one axial aperture for an electric lead-through and being designed as an undetachably fastened integral junction element in accordance with its determination comprising a metal disk including at least one aperture for the electric lead-through and an elastomer part serving as a sealing means which covers completely the metal disk inside facing the case inside,
characterized in that
the elastomer part (2) as measured from the inside of the metal disk (1) is at least in the axial direction so thick that a sealing in the radial direction is accomplished within the range of the surface of the elastomer part upon the metal disk inside by a reduction of the diameter of the tubular case and furthermore prior to the intended use of the sealing means for sealing the case (10), the elastomer part covers and surrounds the radial outer rim and at least the peripheral rim region of the outside of the metal disk axially opposite the metal disk inside.

2. A sealing means according to claim 1,
characterized in that
the elastomer part (2) is at least four times the thickness of the metal disk (1).

3. A sealing means according to one of the claims 1 or,
characterized in that
the elastomer part (2) comprises a lead-through bore (6) coaxial with the lead-through aperture (5) in the metal disk (1), the lead-through bore diameter being less than that of the lead-through aperture in the metal disk.

4. A sealing means according to claim 3.

characterized in that
the elastomer part (2) comprises a conical transition region (7) between the lead-through aperture (5) in the metal disk (1) and the lead-through bore (6) in the elastomer part (2).

5. A process for manufacturing the sealing means according to one of the claims 1 to 4, characterized in that
- a metal disk provided with lead-through apertures is inserted into a mould comprising adjusting pins accurately fitted to the lead-through apertures;
- upon closure of the mould a non cross-linked elastomer moulding material is injected or forced into the mould cavity and
- the moulded material once ejected is cross-linked.

**Revendications**

1. Couvercle de boîtier pour un élément électrique, notamment d'un boîtier de condensateur, comportant au moins un passage axial pour un conducteur électrique et étant un élément composite solide indissociable par destination et constitué par un disque métallique comportant au moins une ouverture pour le passage des coducteurs électriques et par une pièce en élastomère servant d'élément d'étanchéité et recouvrant complètement au moins le côte intérieur du disque métallique situé du côté du boîtier, caractérisé en ce que la partie (2) en élastomère, mesurée depuis le côté intérieur du disque métallique (1), a au moins, dans le sens axial, une épaisseur suffisante pour assurer une étanchéité dans le sens radial dans la zone de la surface d'enveloppe de la partie en élastomère sur le côté intérieur du disque métallique par une réduction du diamètre de l'enveloppe et également pour couvir en les entourant (3, 4), avant l'utilisation du couvercle, suivant sa destination, pour l'obturation du boîtier (10), le bord extérieur radial et au moins la zone marginale périphérique du côté extérieur du disque métallique situé, dans le sens axial, en regard du côté intérieur.

2. Couvercle selon la revendication 1, caractérisé en ce que la partie (2) en élastomère a une égale à quatre fois au moins celle du disque métallique (1).

3. Couvercle selon l'une des revendications 1 ou 2, caractérisé en ce que la partie en élastomère (2) comporte une ouverture de passage (6) qui a le même axe que l'ouverture de passage (5) ménagée dans le disque métallique (1) et dont le diamètre est inférieur au diamètre de l'ouverture de passage ménagée dans le disque de métal.

4. Couvercle selon la revendication 3, caractérisée en ce que la partie (2) en élastomère comporte une partie de transition conique (7) située entre l'ouverture de passage (5) ménagée dans le disque métallique (1) et l'ouverture de passage (6) ménagée dans la partie en élastomère (2).

5. Procédé pour la fabrication du couvercle selon l'une des revendisations 1 à 4, caractérisé en ce qu'une plaque métallique munie d'ouvertures de passage est placée dans un outil de formage qui comporte des tenons d'ajustage s'engageant exactement dans les ouvertures de passage, en ce qu'après fermeture de l'outil de formage on introduit, par pulvérisation ou par injection sous pression, dans la cavité du moule, une masse de moulage en élastomère non imprégnée et en se que la masse moulée est ensuite réticulée.

Fig. 1

Fig. 2